# EUROPEAN PATENT SPECIFICATION

(11) **EP 4 080 310 B1**
(45) Date of publication and mention of the grant of the patent: **30.10.2024**
(21) Application number: 22168743.7
(22) Date of filing: 19.04.2022
(51) Int. Cl.: G05D 1/00

(54) **A METHOD OF CONTROLLING A ROBOT IN RELATION TO A SERVICE SCHEDULE**
VERFAHREN ZUR STEUERUNG EINES ROBOTERS IN BEZUG AUF EINEN BEARBEITUNGSPLAN
PROCÉDÉ DE COMMANDE D'UN ROBOT PAR RAPPORT À UN CALENDRIER DE SERVICE

(30) Priority: 23.04.2021 US 202163178757 P; 01.07.2021 EP 21183046
(43) Date of publication of application: 26.10.2022
(73) Proprietor: Carnegie Robotics, LLC, Pittsburgh, Pennsylvania 15201 (US)
(72) Inventor: Larose, David, Pittsburg, 15201 (US); Thybo, Claus, 8230 Åbyhøj (DK)
(74) Representative: Inspicos P/S

(56) References cited:
- WO-A1-2018/013538
- WO-A1-2018/051349
- CN-A- 109 426 560
- DE-B3- 102015 121 666

## Description

The present invention relates to a method of controlling a robot in relation to a service schedule, such as a service schedule comprising tasks identified or derived from a Service Level Agreement (SLA) made between a requestor and service supplier, such as an owner or lessor of the robot. Often, a SLA is made between an owner or administrator of e.g. a building and a service supplier. The SLA will lay down the price for the service as well as a description of the service, such as cleaning, surface treatment.

Relevant technology may be found in: WO2018/013538, WO20188/051349, CN109426560 and DE102015121666.

A first aspect of the invention relates to a method of controlling a robot, the method comprising:
a) feeding a service schedule to a self-propelled robot, the service schedule identifying a plurality of tasks for the robot to perform,
b) the robot performing one or more of the plurality of tasks,
c) the robot not completing a first task of the plurality of tasks; the robot generating corresponding information,
d) the robot, after step c), performing another of the tasks and
e) identifying and outputting, based on the corresponding information, information relating to the first task
wherein:
- the service schedule comprises, for the first task, one or more parameters according to which the robot should perform the first task,
- step c) comprises the robot not having performed the first task in accordance with the one or more parameters and
- the corresponding information comprises information as to which parameter(s), the first task was not performed in accordance with.

In the present context, a robot is a self-propelled unit, which may move about in an area or scene and which may perform one or more tasks in the area or scene. The robot may comprise one or more elements for facilitating movement, such as wheels, belts, rollers, propellers, wings, fins or the like. The robot may be selfnavigating in the sense that it comprises one or more sensors for sensing obstacles or the like, so that the robot may be able to avoid obstacles and move from one position to another without engaging or bumping into such obstacles. The robot may comprise a controller/processor for receiving sensor output so as to determine a position of the robot in a scene or area and potentially positions of obstacles and for determining a route in the scene or area. The controller/processor may further control an operation of the robot, such as the carrying out of a task of the robot.

The controller may be any type of controller, such as a processor, controller, ASIC, DSP, FPGA, software controlled or hardwired. The controller may be monolithic, or multiple units may perform the operation. Part of the controlling, such as the determination, may be performed in the robot, in a nearby processor, such as if fog computing is used, or in a remote controller, such as if cloud computing is used. Any combination of such units may be used, and if multiple units are used, these units preferably are configured to communicate with each other. A storage for data and/or instructions may be provided in or at the controller and may be configured to communicate with the controller. The controller may be provided in the robot or outside of the robot.

The robot may be autonomous to the degree where the robot is able to react to unexpected situations, such as its path being blocked by luggage. The robot may realize this and move around the luggage to perform its task.

In this context, a task may be one or more of many types of tasks. A task may be a treatment of a surface, a cleansing of a surface, inspection of a surface, a transporting of goods from one position to another, a guiding of a person from one position to another, for example. Other tasks may be monitoring/surveillance, such as to determine positions of obstacles, dirty surfaces or the like, A surface treatment may be a disinfection, painting/lacquering/sanding for example. A surface cleansing may be vacuuming, floor/surface mopping or the like. A transporting task may be bringing out fast food, hauling luggage, mail or parcels, for example. Additional types of tasks may relate to maintenance, tidying up, weeding or the like, such as outside, such as in the fields where a robot may be weeding by identifying weeds and spraying/irradiating these. A task may then be the weeding of a field.

Tasks may be performed within a limited area, such as within a building or a part of a building. Cleaning operations, for example, usually will relate to a building, portions of a building, predetermined rooms, predetermined surfaces, predetermined surface types or the like.

Transporting may be within the building, such as bringing snacks from a bar to a room in a hotel, but may be within larger areas, such as bringing out fast food in a town or city. Transporting tasks may relate to the transport of any type of products, goods or the like in any environment, such as restocking shelves in a supermarket/storage rooms in hotels/hospitals, delivering goods or products within an overall structure (shops in an airport) or to individual consumers (fast food, groceries, parcels).

A service schedule identifies a plurality of tasks. The identification may be a simple reference to a description of the task, which may be in the robot or elsewhere. As described, a task may be defined very precisely, such as exactly which surface or portion of a surface to clean/treat and how or to which degree this cleaning/treatment is to be performed. In other situations, the task may be less strictly defined, such as bring parcel X from position A to position B, where the robot may itself decide how to get from position A to position B.

In many situations, a service provider and a client will make an agreement, often called a Service Level Agreement, specifying the service and parameters of that service. The SLA will define the service to a certain degree so that the parties may see whether the service is delivered in accordance with the agreement so that the service provider may be remunerated in accordance with the SLA. In this context, it is desired to be able to prove or indicate that the tasks have been performed. If a task has not been performed or has been partly performed, documentation for this may also be required, as it may affect the remuneration.

More precisely, the SLA may define a number of tasks to be performed and any further parameters thereof, such as a frequency of cleaning of a surface, a degree or quality of the cleaning of the surface, a time interval within which the surface should be cleaned, the maximum or minimum amount of time allowed for hauling a product, or the like. The service may be adapted to other parameters, such as other use of the surfaces or areas/paths in which the robot is to perform tasks. In some situations, cleaning is not desired within a period of time in which the surface is used by others. In hotels, cleaning of the lobby is not desired in peak hours and cleaning of rooms is not desired during the night. In airports, floor mopping may be desired at night or outside of peak hours, and for transport, some paths, roads or areas may be avoided during periods during which these are busy with other traffic.

Thus, for a task, a period of time may be agreed on during which the task must be performed, or a bonus system may be set up so that if the task is performed within the period of time, a larger bonus is awarded than if the task is performed or completed outside of the period of time. A penalty may be awarded if the task is not performed at all, not completed or performed outside of the bounds or parameters agreed to. A SLA may comprise an elaborate scheme of bonuses and penalties for different tasks, groups of tasks or all tasks. The robot or operator may operate to maximize the bonus, as the bonus may be correlated to the remuneration of the robot owner or service provider. A net value may be optimized where the bonuses, penalties and cost of consumables are taken into account.

Additional or alternative parameters may be defined for a task to fulfil or for the task to be completed. An expenditure of a consumable, such as power, cleaning fluid or the like may be tracked and compared to an allowed amount. Also or alternatively, a quality of a cleaning operation may be defined. If the task is not performed to that quality, the task may not be seen as completed, or a lower bonus may be awarded.

The service schedule may represent all or some of the tasks of an SLA. For each task, a description thereof may exist (e.g. vacuum floor in lobby), as may a period of time within which it should be performed or not be performed, or a maximum or minimum period of time which the task may take. Also, or alternatively, a quality of the performance of the task may be provided.

As mentioned, the descriptions and parameters may be provided in the robot or elsewhere. The robot has access to this data or part of it.

The robot then, at some point in time, after having performed one or more of the tasks, will be performing a first task of the plurality of tasks, which the robot does not complete. In this context, completion may be defined in relation to the task as described above. If the task is not completed within the definition thereof, it will not be completed. Lack of completion may be seen if the task is not completed within a predetermined time interval, with a predetermined quality, or the like. Lack of completion may also be seen if not all of the predetermined area is cleaned/treated/analyzed, such as if part of the area is blocked or occupied so that the robot cannot access it.

The robot will then generate corresponding information. In this context, the corresponding information may simply be an ID or description of the noncompleted task. The information may alternatively or additionally comprise information as to why the task was not completed. The information may describe a quality to which the task was performed or an area which was not cleaned/treated/analyzed. Also, a reason for the lack of completion may be added to the information, such as information that a portion of the area was blocked, that a transport was delayed due to obstructions of the selected path or the like. This information may comprise an image or other data identifying or indicating the obstruction/blockage.

Having not completed the first task, the robot will move on to perform another task of the service schedule.

The robot will thus identify and output information relating to the first task. based on the corresponding information. Clearly, the information may be or comprise the corresponding information. This information may be output in order for a service provider to prove or document (to justify) what tasks have not been performed or completed, or for the client to use for calculating the remuneration of the service provider.

Naturally, the client may be the service provider, but even in this situation, it will be valuable to know why some tasks are not performed.

In some situations, the not completed task may be not completed due to a situation which may change over time. If a portion of an area was blocked by persons, for example, these persons will eventually move, so that the first task may be completed at a later point in time. Thus, one embodiment further comprises the step of the robot reverting to, and completing the first task, wherein the corresponding information relates to an expenditure of one or more of the group consisting of time, power and a consumable, which the robot requires to revert to and complete the first task.

In this situation, a task may comprise information as to how much expenditure is acceptable. The robot or a distance controller may then calculate the expenditure required to complete the task. The robot may then only revert to and complete the first task if the complete expenditure is below a defined expenditure threshold for the task.

In one embodiment:
- the robot is configured to sense and avoid obstacles,
- step c) comprises the robot sensing an obstacle preventing the robot from performing, or at least completing, the first task and
- the corresponding information comprises information related to the obstacle.

Then, the robot may document the reason why it cannot complete the task. The corresponding information may relate to the obstacle and/or type of obstacle and/or a position thereof and/or what the robot is preventing from doing. The obstacle may prevent the robot from e.g. cleaning a portion of a floor, where the corresponding information may indicate or represent the portion of the floor.

The corresponding information may comprise an image or other representation or description of the obstacle, such as sensor information derived by the robot.

Another reason why the robot is not able to complete a task may be if it runs out of a consumable or if the portion of the task which has been performed has consumed more consumable than desired. In this situation, the corresponding information may thus comprise information as to which consumable is depleted or overly spent and/or a portion of the task which has not been performed, such as an area of a floor which has not been cleaned.

In one embodiment, the first task is a step of treating a first surface area, wherein the corresponding information relates to a position and/or an area, of the first surface area, which is not cleansed. As mentioned, the cleansing task may be one or more of: floor washing, floor vacuuming, floor mopping, surface disinfection, or the like.

Instead, the task may be a monitoring or checking task where the first surface is checked or monitored to determine a parameter thereof, such as quality checking/inspection of any type of product or area - sewer, supermarket, graffiti on walls, cleanliness of windows/floors/surfaces (dirt/bacteria/vira). In such situations, the corresponding information may comprise the position of the task (area not checked).

Clearly, the robot may, generally, determine and output also other information. The task of the robot may be a transporting task, where the robot additionally checks or monitors surfaces while transporting the goods. Thus, even though the main task is not that of checking/monitoring, the robot may nevertheless perform this checking/monitoring and output information relating to this checking/monitoring. This information may be used for controlling other robots, such as cleaning robots, based on the cleanliness of the surfaces passed by the transporting robot.

In one embodiment, the first task comprises transporting predetermined goods from a pick-up position to a delivery position, and wherein the corresponding information relates to the goods, the delivery position and/or the pick-up position.

As mentioned above, the service schedule comprises, for the first task, one or more parameters according to which the robot should perform the first task, and wherein step c) comprises the robot not having performed the first task in accordance with the one or more parameters. The corresponding information comprises information as to which parameter(s) the first task was not performed in accordance with.

A parameter may be timing information, such as a period of time within the task should be performed, an earliest point in time such as a time of day or a date after which the task should be initiated, a latest point in time such as a time of day or a data before which the task should be completed, or the like.

If the robot did not perform or complete the task within the period of time, before the latest point in time and/or after the earliest point in time, the task may be seen as not performed.

Also or alternatively, a task may be allowed to spend a predetermined amount of a consumable. If more consumable is used, the task may be seen as not completed. If the task comprises a cleanliness parameter but fails to clean and reach that cleanliness, the task may be seen as not completed.

Another parameter of a task may relate to the performing of the task. For a cleaning/monitoring task, speed may be parameter. If the speed exceeds a maximum speed, the cleaning/monitoring may be less efficient, and the task may then be seen as not completed. Also, the performing of the task may influence the environment negatively. A floor cleaning may exert a pressure or suction force to the surface, and a disinfecting task may irradiate the surface. If the irradiation/pressure/suction force exceeds predetermined limits, this influence may be too large, and the task may be seen as not performed or completed. Also, if such force/irradiation or the like is too small, the cleaning/disinfection may be insufficient, and the task may be seen as not performed for that reason.

Also, or alternatively, the one or more parameters may be selected from the group consisting of: an activity to be performed, a position or area where the task is to be performed, a point in time at which the first task must be finalized, a point in time at which the first task may be initiated at the earliest, a period of time within which the first task must be performed, and a minimum quality with which the first task must be performed.

In one embodiment:
- step d) comprises the robot receiving instructions to perform an additional task, which may be a task not in the service schedule, and the robot performing the additional task, and
- the corresponding information relates to an expenditure of one or more of the group consisting of time, power and a consumable, which the robot needs to perform the additional task and all remaining tasks of the service schedule.

Then, the robot may be interrupted and instructed to perform the additional task. The robot may then generate corresponding information relating to the "cost" thereof in time, power and/or a consumable which is required to perform this additional task. This "cost" may then be taken into account in the remuneration of the service provider as may the performing of the additional task.

The robot, or a remote controller, may compare this information to overall limits/state of the robot to arrive at how much of the parameters is available for the extra task. If the performing of this additional task postpones the performing or completion of other tasks of the service schedule, this may be realized, and an operator may be requested to accept this fact. Then, the performing of the additional task may for example be initiated only after receiving a GO instruction from an operator.

A second aspect of the invention relates to a system comprising a self-propelled robot and a controller, wherein:
a) the robot is configured to receive a service schedule identifying a plurality of tasks for the robot to perform,
b) the robot is configured to perform one or more of the plurality of tasks,
c) the robot is configured to not complete a first task of the plurality of tasks and to generate corresponding information,
d) the robot being configured to, after having not completed the first task, perform another of the tasks and
e) the controller is configured to receive the corresponding information and to output information relating to the first task
wherein:
- the robot comprises a sensor for determining a parameter of a performance of a task,
- the service schedule comprises, for the first task, a quantity of the parameter according to which the robot should perform the first task,
- the robot does not complete the first task if the parameter, determined by the sensor while the first task is performed, is not according to the quantity and
- the controller is configured to output the corresponding information comprising information as to the parameter which the first task was not performed in accordance with.

Clearly, this aspect may be combined with the above aspect, embodiments, situations and considerations.

The service schedule may be formed by information stored in a storage, such as a RAM, flash memory, hard drive, or other storage in the robot. Alternatively, the information may be provided outside of the robot, such as at or in a remote controller with which the robot is configured to communicate, preferably wirelessly.

The robot is configured to perform the tasks and is self-propelled. Thus, the robot preferably comprises a power source, if not connected to an external power source, as well as one or motors or drives configured to propel the robot. The robot may drive, roll or move along a surface and/or may fly or swim/sail/dive if desired.

The self-propelling may be controlled or guided by one or more sensors configured to detect structures, such as walls, furniture or the like but also unexpected obstacles such as persons, luggage or the like. Self-propelled robots often comprise not only a range of sensors but also information representing a map of the area in which the robot is to operate, so that the robot may ascertain its position in the area and correlate this to its operation.

In addition to the means required for the robot to be self-propelled, the robot may comprise means enabling it to perform the tasks. A variety of tasks are described above. Robots are often built to perform specific tasks, such as cleaning tasks, monitoring tasks, transport tasks or inspection tasks. Robots may, naturally, comprise means for performing multiple tasks. A cleaning robot will comprise suitable cleaning means, such as a vacuuming device, a scrubber device, a mopping device or the like. An inspection robot may comprise suitable inspection means such as detectors, sensors, cameras or the like. A transport robot may comprise a cargo hold or surface for receiving the product or cargo to be transported.

Naturally, the robot may be selected or equipped to handle the tasks at hand.

The controller may be any type of controller, such as a processor, controller, ASIC, DSP, FPGA, software controlled or hardwired. The controller may be monolithic, or multiple units may perform the operation. Any combination of such units may be used, and these units preferably are configured to communicate with each other. The above-mentioned storage may be provided in or at the controller and may be configured to communicate with the controller. The controller may be provided in the robot or outside of the robot.

The robot may comprise communicating means, such as for wireless communication, for communicating the service schedule and/or the corresponding information.

In one embodiment, the robot is configured to revert to, and complete the first task, wherein the controller is configured to generate corresponding information relating to an expenditure of one or more of the group consisting of time, power and a consumable, which the robot requires to revert to and complete the first task.

To this end, the robot may comprise a storage or hold for the power or consumable. The robot may track or log the expenditure of the time, power or consumable during performing of individual tasks to arrive at an estimated expenditure of time/power/consumable required to revert to and complete the first task.

The expenditure may relate to how much of the first task was not completed. The consumption of a cleaning fluid, for example, would depend on e.g. the area required to be cleaned.

Also, the robot may not be in the vicinity of the area where the first task is to be completed. If the robot also has to move to the area where the first task is then to be completed, time and power may be required for moving the robot to that area, in addition to the time and power required to actually complete the first task. The robot may determine this based on e.g. knowledge of its present position and a position at which the robot must be to complete the first task. Often, self-propelled robots are able to determine their positions in the venue or scene in which they operate. When the robot discontinues the first task, the robot may log the position, for example, so that it knows where to revert to, if the first task is to be resumed to be completed.

Then, a rule may be defined determining whether the expenditure is too high for the robot to be required to complete the first task. A deduction in bonus may be caused by non-completion of the first task, where a bonus can be allocated for finalizing the first task. If a deduction is also caused by the increased expenditure, a determination may be made as to whether to instruct the robot to resume the first task or not.

In one embodiment:
- the robot comprises one or more sensors for sensing and avoiding obstacles,
- the robot is configured to not complete the first task when the sensor(s) sense(s) an obstacle preventing the robot from performing the first task and
- the controller is configured to output the corresponding information comprising information related to the obstacle.

Thus, as described above, the corresponding information may indicate the reason for not completing the task.

In one embodiment, the robot is configured to cleanse a surface, and the first task is a cleansing of a first surface area, where the controller is configured to provide the corresponding information relating to a position and/or an area of the first surface area which was not cleaned.

In one embodiment, the first task comprises transporting predetermined goods from a pick-up position to a delivery position, where the corresponding information relates to the goods, the delivery position and/or the pick-up position.

As mentioned:
- the robot comprises a sensor for determining a parameter of a performance of a task,
- the service schedule comprises, for the first task, a quantity of the parameter according to which the robot should perform the first task, and
- the robot does not complete the first task if the parameter, determined by the sensor while the first task is performed, is not according to the quantity.

As mentioned above, the parameter may be time, expenditure of a consumable or power, a degree of cleanliness, or the like. For transport, the temperature of the cargo hold, the smoothness of the transport (not shaking the goods), the delivery time or the like may be suitable parameters. It is common to have services connected with expected or promised parameters.

Thus, the sensor may be a clock or a volume/power sensor for example.

If the parameter is time, the quantification may relate to a period of time elapsed during performing of the task. In addition or alternatively, the quantification may relate to when the task was initiated and/or completed. This information may be compared to timing information, then being the parameter, which may relate to a period of time within which the task is desired performed, an earliest point in time at which the task is desired initiated and/or a latest point in time where the task is desired completed.

In one embodiment, the controller is configured to output the corresponding information comprising information as to the parameter, the first task was not performed in accordance with. This may be used for future planning of the robot, such as by providing it with a higher allowance of time for the task or for use of a consumable. If the area is becoming more dirty due to more traffic, this may be derived from the knowledge and taken into account in the SLA and thus in the determination of the parameter(s) of that task.

In one embodiment, the one or more parameters is/are selected from the group consisting of: an activity to be performed, a position or area where the task is to be performed, a point in time at which the first task must be finalized, a point in time at which the first task may be initiated at the earliest, a period of time within which the first task must be performed, a minimum quality with which the first task must be performed, or the like.

As mentioned above, quality may be defined by speed/pressure/suction force/intensity or the like.

In one embodiment:
- the robot is configured to receive instructions to perform an additional task and to perform the additional task and all remaining tasks of the service schedule, and
- the controller is configured to provide the corresponding information relating to an expenditure of one or more of the group consisting of time, power and a consumable, which the robot needs to perform the additional task and all remaining tasks of the service schedule.

Then, the robot may comprise sensors for sensing the present state of the power or the consumable. Also, as described above, the robot or controller may comprise knowledge or an estimate of how much time/power/consumable is required to complete the task and potentially move to the location at which the task is to be completed.

Technologies related to the present invention may be found in the Applicants co-pending applications filed on even date and with the titles "A METHOD OF OPERATING A ROBOT" and "A METHOD OF OPERATING ONE OR MORE ROBOTS"

In the following, preferred embodiments are described with reference to the drawing, wherein:
- Figure 1 illustrates a hotel in which a robot is working,
- Figure 2 illustrates a cleaning robot.

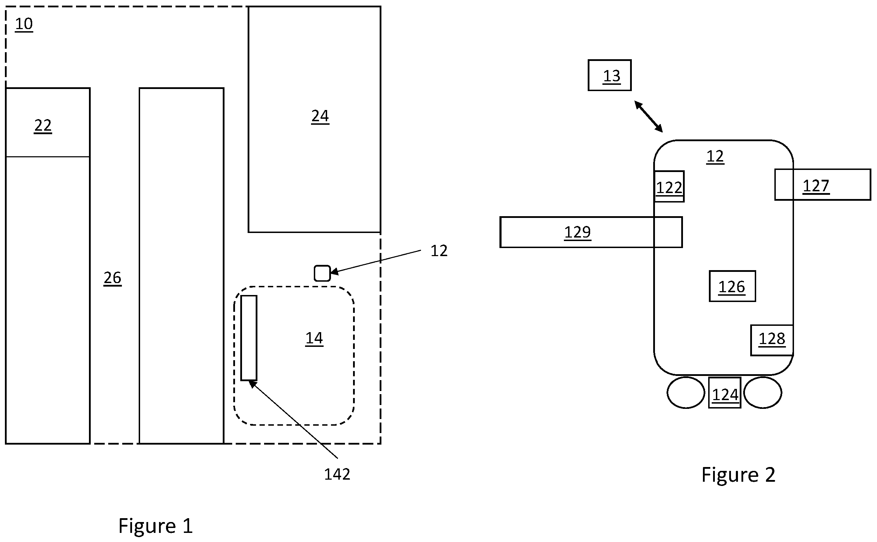

In figure 1, an example embodiment of a robot in its working space. In this example, the working space is a hotel 10 in which the robot 12 operates, such as for cleaning, disinfecting, quality checking, delivering supplies or amenities and the like. The hotel has a reception desk 142 in a reception area 14 as well as a number of rooms 22, an aisle 26 and a grand ballroom 24.

The robot 12 may have fixed tasks such as floor cleaning in the reception area 14 and the aisle 26 as well as, or alternatively, disinfecting walls, handrails, tabletops, chairs and the like. The robot 12 may also or alternatively be called for to move supplies, such as fresh towels, from a central storage to local storages close to the rooms 22 or directly to the rooms. In addition, or alternatively, the robot may be called for to do specific tasks, such as bringing amenities, such as snacks, from the reception 142 or a bar/restaurant to an occupant of a room 22.

In figure 2, a robot 12 is seen having a controller 126, sensors 122 for detecting e.g. obstructions and other elements for navigating, a cleaning element 124 for, in this situation, cleaning floors, a sensor 128 for detecting the cleanliness of the cleaned floor and, optionally or additionally, an arm 129 comprising an irradiating element for irradiating surfaces, such as table tops, with radiation killing bacteria and viruses.

Clearly, this situation of a hotel may be expanded or transferred to any other setting, such as an airport, a storage facility, a shop, a house, a building, a town, a city, a field or the like. Depending on the setting, the tasks of the robot may change. Clearly, different robots may have different capabilities, different sensors, actuators, interface elements and the like. A delivery in a hotel may be towels, where in an airport it may be tax free goods for a store. In a storage facility or shop, it may be products or parcels, where in a town or city it may be any type of products, such as groceries, fast food, take-away or the like. In a field, a delivery may be fertilizer or weeding agents.

The cleaning schedule of the robot may comprise fixed tasks at fixed points in time or with fixed intervals, such as the sweeping or washing of the floor in the reception area three times each day and in the aisle twice a day, where each room must be vacuumed once each day. Rooms are often vacated in the middle of the day, so that this is the preferred period of time for vacuuming the rooms. On the other hand, the aisle may be the busiest in the morning and late afternoon, so that it may be desired to not clean there in these time intervals.

The reception is the busiest in the morning for checking out and in the afternoon for the arrival of new guests. The reception may be very busy at specific, other points in time, such as when the grand ballroom is rented for an event, such as a wedding. Outside of such events, the grand ballroom may be vacated for days, so that the cleaning thereof may be more sporadic, such as before and after an event but perhaps not that time critical.

A cleaning operation often will be decided on or ordered as an operation with a particular goal, such as vacuuming of the complete floor of an aisle. It is desirable that the robot logs its operations so that compliance with the operation or task may be proved. However, the robot may not be able to complete the task.

Different reasons exist for not completing a task. The robot may be directly prevented from completing the task. Alternatively, the robot may not be able to complete the task, such as if the robot is running out of power or a consumable required to perform the task. Also, the task may have to be performed within certain parameters, such as within a predetermined time interval, so that the task, even when all required activities are performed, is not completed within the required parameters.

A robot may be prevented from performing a task for a number of reasons. If the robot is cleaning a floor, luggage, goods or persons may be in the way, so that the robot will have to move around the luggage etc. and clean portions of the floor which are available to it. Then, the robot is prevented from cleaning a portion of the floor. Alternatively, obstacles may exist which prevent the robot from reaching the area in which the task is to be performed.

The robot will then output information to this effect. This information may comprise sensor data, such as an image, illustrating or proving the obstacle(s) preventing the robot from performing the task. The robot may also output information relating to the particular task showing that there was a good reason for not cleaning that portion. The robot will then perform other tasks of its service schedule.

The robot may then deliver a report describing the area cleaned, the area not cleaned and the reasons therefor. In one example, the service provider may not loose a bonus, if the reason for not completing a task is not due to the service provider.

If the robot did not complete the task due to one or more parameters of the task not being met, corresponding information may be stored relating to such parameters, such as the parameter with which the task was performed.

A parameter may be a period of time within which a task is to be performed. As described above, cleaning may be desired performed within predetermined time periods or outside of certain time periods. It may be desired that a task is finalized at a certain point in time or is not initiated before a certain point in time.

Thus, if the robot performs the task but outside of the allowed time period, the task may be seen as not completed.

The report may be combined with an agreed-on set of tasks for the robot, so that discrepancies may be seen. The agreed-on set of tasks may form a Service Level Agreement specifying the individual tasks and any parameters thereof. A bonus for performing the tasks - or each task - may be defined, as may a penalty for not performing a task or not performing the task within the required parameter(s). When a task is defined by a parameter, the bonus or penalty may be defined on the basis of this parameter. If the parameter is time, such as a latest point in time of completing an action of a task, a delay of performing an action may incur a higher penalty if the delay is larger.

Then, if the robot has been prevented physically from cleaning a portion, for example, of a floor, the robot may revert to that area at a later point in time in order to attempt again to clean it. It may be possible to clean the area within the allocated time, for example, so that the task is no longer not-completed. Alternatively, it may be possible to perform the task with a tolerable delay so that, for example, a penalty becomes lower or acceptable. If the area is still occupied, corresponding information may be generated.

Other parameters may relate to a consumption, speed, quality or other parameter of the robot while performing the task. A consumption, such as of power or other consumables, such as cleansing agents, may be monitored. If the consumption exceeds a maximum limit for the task, the task may be assumed not completed.

Another parameter may be a position, so that if the task is not performed at a desired position, the task may be seen as not completed.

Yet another parameter may be a quality of an operation defined by the task. The task may be a cleansing action, such as by the means 124, where the quality has to do with how clean the surface or element is after the cleansing. If the surface or element is still too dirty, the task may be seen as not completed. A cleansing task may be a sweeping, mopping, washing and/or vacuuming of a floor or other surface and/or a disinfecting of a surface. Thus, the robot may comprise one or more sensors 128 for determining this parameter or multiple parameters of the operation of the cleansing means 124. This documentation may be used for determining whether the task has been completed or not.

Similarly, if the task is a disinfection of a surface, the intensity or quality of the disinfection may be monitored and compared to set parameters. The intensity may be that of disinfecting radiation or the amount of dispensed disinfecting fluid and/or the speed of movement of the robot vis-à-vis the surface.

Another parameter may relate to the operation of the robot. In one situation, where the task is a scrubbing of a floor, a parameter may be set for a force exerted on the floor by the scrubdeck. A too low force may not clean the surface sufficiently, and a too large force may wear the floor unnecessarily. Thus, this force may be determined using a sensor and logged. If the parameter setting is not observed during the performing of the task, the task may be seen as not completed.

The robot preferably is self-propelled in a manner so that it may perform the tasks without human intervention. Additionally, it may be desired that the robot is so intelligent that it may not only perform the tasks required but may deviate from tasks or even re-arrange their order. The robot may comprise sensors 122 allowing the robot to move autonomously such as by detecting obstacles and/or being able to navigate in a space, such as on the basis of a map of the space, as is known.

The robot, or the controller 126, may be configured to communicate with an external controller 13, from where a list of one or more tasks, which may be called a service schedule, may be received together with, if desired, particular parameters for one or more tasks as described above.

The robot may then perform the tasks in any order, such as an order determined by the controller 13 or one determined by the controller 126. The robot or controller may log its performance and the progress with individual tasks, such as sensor data or parameters determined during the performing of individual tasks.

The robot may then determine if a task is completed or not. Alternatively, the data may be fed to the controller 13 which may perform that determination. If the robot determines that a task cannot be completed, such as if the robot is blocked or otherwise prevented from performing or completing a task, the robot may feed such information, such as the information it bases this determination on, to the controller 13.

The controller 13 or the controller 126 may in some circumstances re-arrange any remaining tasks in order to have as many tasks performed as possible. For each task, one or more parameters may be defined, according to which the tasks are to be performed. Such parameters may be time or consumption of a consumable, so that the sequence of the remaining tasks may be defined according to the time at which each task may be initiated, must be finalized, or the like. Some tasks may be acceptably performed later than others, for example, so that a rearranging may be desirable. Also, one of the controllers may direct the robot to perform a task which was earlier not completed.

Tasks may be rather different from each other. One task may be a cleansing action and another task may be a charging of the robot. Thus, if more energy has been spent than expected, the charging task may be moved forward in time to allow the robot to charge sufficiently so that the remainder of the tasks may be performed. A task may also be an emptying of a waste container, restocking of cleansing fluid or the like.

In a particular example, the robot may further comprise operator engaging means 127 for a human operator to engage and control the robot. The robot may comprise a surface for an operator to stand or sit on and handles for the operator to hold and for use to guide the robot. Thus, an operator may engage such means and thereby overrule the operation of the robot. This will also prevent the robot from performing the task at hand or the next task. The operation may then control the robot to perform e.g. an urgent task and may then release the robot for the robot to revert to the remaining tasks. The robot will then output information as to the operator's overriding as information relating to the task which the robot was prevented from performing. Clearly, alternatively, the robot may be remote controllable, whereby the overriding may again be determined and logged.

In one or more examples, the described techniques may be implemented in hardware, software, firmware, or any combination thereof. If implemented in software, the functions may be stored as one or more instructions or code on a computer-readable medium and executed by a hardware-based processing unit. Computer-readable media may include nontransitory computer-readable media, which corresponds to a tangible medium such as data storage media (e.g., RAM, ROM, EEPROM, flash memory, or any other medium that can be used to store desired program code in the form of instructions or data structures and that can be accessed by a computer).

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor" as used herein may refer to any of the foregoing structure or any other physical structure suitable for implementation of the described techniques. Also, the techniques could be fully implemented in one or more circuits or logic elements.

## Claims

1. A method of controlling a robot, the method comprising:
a) feeding a service schedule to a self-propelled robot, the service schedule identifying a plurality of tasks for the robot to perform,
b) the robot performing one or more of the plurality of tasks,
c) the robot not completing a first task of the plurality of tasks, and
d) the robot, after step c), performing another of the tasks,
**characterized in that**
step c) further comprises the robot generating information corresponding to the non-completion of the first task,
e) the method further comprising the step of identifying and outputting, based on the corresponding information, information relating to the first task,
wherein:
- the service schedule comprises, for the first task, one or more parameters according to which the robot should perform the first task,
- step c) comprises the robot not having performed the first task in accordance with the one or more parameters and
- the corresponding information comprises information as to which parameter(s), the first task was not performed in accordance with.

2. A method according to claim 1, further comprising the step of the robot reverting to, and completing the first task, wherein the corresponding information relates to an expenditure of one or more of the group consisting of time, power and a consumable, which the robot requires to revert to and complete the first task.

3. A method according to claim 1, wherein:
- the robot is configured to sense and avoid obstacles,
- step c) comprises the robot sensing an obstacle preventing the robot from performing the first task and
- the corresponding information comprises information related to the obstacle.

4. A method according to claim 1, wherein the first task is a step of treating a first surface area, wherein the corresponding information relates to a position and an area, of the first surface area, which is not cleansed.

5. A method according to claim 1, wherein the first task comprises transporting predetermined goods from a pick-up position to a delivery position, and wherein the corresponding information relates to the goods, the delivery position and/or the pick-up position.

6. A method according to any of the preceding claims, wherein the one or more parameters is/are selected from the group consisting of: an activity to be performed, a position or area where the task is to be performed, a point in time at which the first task must be finalized, a point in time at which the first task may be initiated at the earliest, a period of time within which the first task must be performed, and a minimum quality with which the first task must be performed.

7. A method according to claim 1, wherein:
- step d) comprises the robot receiving instructions to perform an additional task and the robot performing the additional task, and
- the corresponding information relates to an expenditure of one or more of the group consisting of time, power and a consumable, which the robot needs to perform the additional task and all remaining tasks of the service schedule.

8. A system comprising a self-propelled robot (12) and a controller (126), wherein:
a) the robot is configured to receive a service schedule identifying a plurality of tasks for the robot to perform,
b) the robot is configured to perform one or more of the plurality of tasks, and
c) the robot is configured to not complete a first task of the plurality of tasks, ,
d) the robot being configured to, after having not completed the first task, perform another of the tasks and
**characterized in that**:
- the robot is configured to generate information corresponding to the noncompleted first task,
e) the controller is configured to receive the corresponding information and to output information relating to the first task,
wherein:
- the robot comprises a sensor for determining a parameter of a performance of a task,
- the service schedule comprises, for the first task, a quantity of the parameter according to which the robot should perform the first task,
- the robot does not complete the first task if the parameter, determined by the sensor while the first task is performed, is not according to the quantity and
- the controller is configured to output the corresponding information comprising information as to the parameter, the first task was not performed in accordance with.

9. A system according to claim 8, wherein the robot is configured to revert to, and complete the first task, wherein the controller is configured to generate corresponding information relating to an expenditure of one or more of the group consisting of time, power and a consumable, which the robot requires to revert to and complete the first task.

10. A system according to claim 8 or 9, wherein:
- the robot comprises one or more sensors (122) for sensing and avoiding obstacles,
- the robot is configured to not complete the first task when the sensor(s) sense(s) an obstacle preventing the robot from performing the first task and
- the controller is configured to output the corresponding information comprising information related to the obstacle.

11. A system according to any of claims 8-10, wherein:
- the robot is configured to receive instructions to perform an additional task and to perform the additional task and all remaining tasks of the service schedule, and
- the controller is configured to provide the corresponding information relating to an expenditure of one or more of the group consisting of time, power and a consumable, which the robot needs to perform the additional task and all remaining tasks of the service schedule.

## Patentansprüche

1. Verfahren zum Steuern eines Roboters, wobei das Verfahren umfasst:
a) Einbringen eines Betriebsplans in einen selbstfahrenden Roboter, wobei der Betriebsplan mehrere Aufgaben identifiziert, die der Roboter ausführen soll,
b) Ausführen von einer oder mehreren der mehreren Aufgaben durch den Roboter,
c) Nicht-Abschließen einer ersten Aufgabe der mehreren Aufgaben durch den Roboter und
d) Ausführen einer weiteren der Aufgaben durch den Roboter nach Schritt c),
**dadurch gekennzeichnet, dass**
Schritt c) ferner umfasst, dass der Roboter Informationen entsprechend dem Nicht-Abschließen der ersten Aufgabe erzeugt,
e) wobei das Verfahren ferner basierend auf den entsprechenden Informationen den Schritt des Identifizierens und Ausgebens von Informationen, die sich auf die erste Aufgabe beziehen, umfasst,
wobei:
- der Betriebsplan für die erste Aufgabe einen oder mehrere Parameter umfasst, gemäß denen der Roboter die erste Aufgabe ausführen soll,
- Schritt c) umfasst, dass der Roboter die erste Aufgabe nicht gemäß dem einen oder den mehreren Parametern ausgeführt hat, und
- die entsprechenden Informationen Informationen darüber umfassen, gemäß welchem bzw. welchen Parametern die erste Aufgabe nicht ausgeführt wurde.

2. Verfahren nach Anspruch 1, ferner umfassend den Schritt des Zurückkehrens des Roboters zu der ersten Aufgabe und des Abschließens dieser, wobei sich die entsprechenden Informationen auf einen Aufwand von einem oder mehreren aus der Gruppe bestehend aus Zeit, Energie und einem Verbrauchsmaterial beziehen, den der Roboter erfordert, um zu der ersten Aufgabe zurückzukehren und diese abzuschließen.

3. Verfahren nach Anspruch 1, wobei:
- der Roboter konfiguriert ist, Hindernisse zu erkennen und diesen auszuweichen,
- Schritt c) umfasst, dass der Roboter ein Hindernis erkennt, das den Roboter daran hindert, die erste Aufgabe auszuführen, und
- die entsprechenden Informationen Informationen bezüglich des Hindernisses umfassen.

4. Verfahren nach Anspruch 1, wobei die erste Aufgabe ein Schritt des Behandelns eines ersten Flächenbereichs ist, wobei sich die entsprechenden Informationen auf eine Position und einen Bereich des ersten Flächenbereichs beziehen, der nicht gereinigt ist.

5. Verfahren nach Anspruch 1, wobei die erste Aufgabe das Transportieren vorbestimmter Waren von einer Abholposition zu einer Abgabeposition umfasst, und wobei sich die entsprechenden Informationen auf die Waren, die Abgabeposition und/oder die Abholposition beziehen.

6. Verfahren nach einem der vorstehenden Ansprüche, wobei der eine oder die mehreren Parameter ausgewählt werden aus der Gruppe bestehend aus: einer auszuführenden Tätigkeit, einer Position oder einem Bereich, wo die Aufgabe ausgeführt werden soll, einem Zeitpunkt, zu dem die erste Aufgabe abgeschlossen sein muss, einem Zeitpunkt, zu dem die erste Aufgabe frühestens begonnen werden darf, einem Zeitraum, innerhalb dem die erste Aufgabe ausgeführt werden muss, und einer Mindestqualität, mit der die erste Aufgabe ausgeführt werden muss.

7. Verfahren nach Anspruch 1, wobei:
- Schritt d) umfasst, dass der Roboter Befehle zum Ausführen einer zusätzlichen Aufgabe erhält und der Roboter die zusätzliche Aufgabe ausführt, und
- die entsprechenden Informationen sich auf einen Aufwand von einem oder mehreren aus der Gruppe bestehend aus Zeit, Energie und einem Verbrauchsmaterial beziehen, den der Roboter erfordert, um die zusätzliche Aufgabe und alle verbleibenden Aufgaben des Betriebsplans auszuführen.

8. System, das einen selbstfahrenden Roboter (12) und eine Steuerung (126) umfasst, wobei:
a) der Roboter konfiguriert ist, einen Betriebsplan zu empfangen, der mehrere Aufgaben identifiziert, die der Roboter ausführen soll,
b) der Roboter konfiguriert ist, eine oder mehrere der mehreren Aufgaben auszuführen, und
c) der Roboter konfiguriert ist, eine erste Aufgabe der mehreren Aufgaben nicht abzuschließen,
d) der Roboter konfiguriert ist, nachdem er die erste Aufgabe nicht abgeschlossen hat, eine andere der Aufgaben auszuführen, und
**dadurch gekennzeichnet, dass**:
- der Roboter konfiguriert ist, Informationen entsprechend der nicht abgeschlossenen ersten Aufgabe zu erzeugen,
e) die Steuerung konfiguriert ist, die entsprechenden Informationen zu empfangen und Informationen bezüglich der ersten Aufgabe auszugeben,
wobei:
- der Roboter einen Sensor zum Bestimmen eines Parameters einer Ausführung einer Aufgabe umfasst,
- der Betriebsplan für die erste Aufgabe eine Größe des Parameters umfasst, gemäß der der Roboter die erste Aufgabe ausführen soll,
- der Roboter die erste Aufgabe nicht abschließt, wenn der von dem Sensor bestimmte Parameter während des Ausführens der ersten Aufgabe nicht der Größe entspricht, und
- die Steuerung konfiguriert ist, die entsprechenden Informationen auszugeben, die Informationen über den Parameter umfassen, gemäß dem die erste Aufgabe nicht ausgeführt wurde.

9. System nach Anspruch 8, wobei der Roboter konfiguriert ist, zu der ersten Aufgabe zurückzukehren und diese abzuschließen, wobei die Steuerung konfiguriert ist, entsprechende Informationen zu erzeugen, die sich auf einen Aufwand von einem oder mehreren aus der Gruppe bestehend aus Zeit, Energie und einem Verbrauchsmaterial beziehen, den der Roboter erfordert, um zu der ersten Aufgabe zurückzukehren und diese abzuschließen.

10. System nach Anspruch 8 oder 9, wobei:
- der Roboter einen oder mehrere Sensoren (122) zum Erkennen und Ausweichen von Hindernissen umfasst,
- der Roboter konfiguriert ist, die erste Aufgabe nicht abzuschließen, wenn der bzw. die Sensoren ein Hindernis erkennen, das den Roboter daran hindert, die erste Aufgabe auszuführen, und
- die Steuerung konfiguriert ist, die entsprechenden Informationen auszugeben, die Informationen in Bezug auf das Hindernis umfassen.

11. System nach einem der Ansprüche 8 bis 10, wobei:
- der Roboter konfiguriert ist, Befehle zur Ausführung einer zusätzlichen Aufgabe zu empfangen und die zusätzliche Aufgabe und alle verbleibenden Aufgaben des Betriebsplans auszuführen, und
- die Steuerung konfiguriert ist, die entsprechenden Informationen bezüglich eines Aufwands von einem oder mehreren aus der Gruppe bestehend aus Zeit, Energie und einem Verbrauchsmaterial bereitzustellen, den der Roboter erfordert, um die zusätzliche Aufgabe und alle verbleibenden Aufgaben des Betriebsplans auszuführen.

## Revendications

1. Procédé de commande d'un robot, le procédé comprenant de :
a) introduire un programme de service dans un robot automoteur, le programme de service identifiant une pluralité de tâches à exécuter par le robot,
b) exécuter par le robot une ou plusieurs de la pluralité de tâches,
c) ne pas achever par le robot une première tâche d'une pluralité de tâches et
d) exécuter par le robot, après l'étape c), une autre des tâches,
**caractérisé en ce que**
l'étape c) comprend en outre la génération par le robot d'une information correspondant au non achèvement de la première tâche,
e) le procédé comprenant en outre l'étape d'identification et de sortie, sur la base de l'information correspondante, d'une information relative à la première tâche,
dans lequel :
- le programme de service comprend, pour la première tâche, d'un ou plusieurs paramètres selon lesquels le robot devrait exécuter la première tâche,
- l'étape c) comprend que le robot n'ait pas exécuté la première tâche conformément à un ou plusieurs paramètres et
- l'information correspondante comprend une information relative à conformément quel(s) paramètre(s) la première tâche n'a pas été exécutée.

2. Procédé selon la revendication 1, comprenant en outre l'étape de retour du robot à la première tâche et de son achèvement, dans lequel les informations correspondantes sont relatives à une dépense d'un ou plusieurs éléments du groupe constitué de temps, d'énergie et d'un consommable, dont le robot a besoin pour revenir à la première tâche et l'achever.

3. Procédé selon la revendication 1, dans lequel :
- le robot est configuré pour détecter et éviter des obstacles,
- l'étape c) comprend la détection par le robot d'un obstacle empêchant le robot d'exécuter la première tâche et
- les informations correspondantes comprennent des informations relatives à l'obstacle.

4. Procédé selon la revendication 1, dans lequel la première tâche est une étape de traitement d'une première zone de surface, dans lequel les informations correspondantes sont relatives à une position et à une zone de la première zone de surface qui n'est pas nettoyée.

5. Procédé selon la revendication 1, dans lequel la première tâche comprend le transport de marchandises prédéachevées d'une position de ramassage à une position de livraison, et dans lequel les informations correspondantes sont relatives aux marchandises, à la position de livraison et/ou à la position de ramassage.

6. Procédé selon une quelconque des revendications précédentes, dans lequel le ou les paramètres sont sélectionnés dans le groupe constitué de : une activité à exécuter, une position ou une zone où la tâche doit être exécutée, un moment dans le temps auquel la première tâche doit être finalisée, un moment dans le temps auquel la première tâche peut être lancée au plus tôt, une période de temps dans laquelle la première tâche doit être exécutée et une proportion minimale dans laquelle la première tâche doit être exécutée.

7. Procédé selon la revendication 1, dans lequel :
- l'étape d) comprend le fait que le robot reçoit des instructions pour exécuter une tâche supplémentaire et que le robot exécute la tâche supplémentaire, et
- les informations correspondantes concernent une dépense d'un ou plusieurs éléments du groupe constitué de temps, d'énergie et d'un consommable, dont le robot a besoin pour exécuter la tâche supplémentaire et toutes les tâches restantes du programme de service.

8. Système comprenant un robot automoteur (12) et un contrôleur (126), dans lequel :
a) le robot est configuré pour recevoir un programme de service identifiant une pluralité de tâches à exécuter par le robot,
b) le robot est configuré pour exécuter une ou plusieurs tâches de la pluralité de tâches, et
c) le robot est configuré pour ne pas achever une première tâche de la pluralité de tâches,
d) le robot étant configuré pour, après n'avoir pas achevé la première tâche, exécuter une autre des tâches et
**caractérisé en ce que** :
- le robot est configuré pour générer des informations correspondant à la première tâche non achevée,
e) le contrôleur est configuré pour recevoir les informations correspondantes et pour délivrer des informations relatives à la première tâche,
dans lequel :
- le robot comprend un capteur pour déterminer un paramètre d'une exécution d'une tâche,
- le programme de service comprend, pour la première tâche, une proportion du paramètre selon laquelle le robot doit exécuter la première tâche,
- le robot n'exécute pas la première tâche si le paramètre, déterminé par le capteur pendant que la première tâche est exécutée, n'est pas conforme à la proportion et
- le contrôleur est configuré pour délivrer en sortie les informations correspondantes comprenant des informations concernant le paramètre conformément auxquelles la première tâche n'a pas été exécutée.

9. Système selon la revendication 8, dans lequel le robot est configuré pour revenir à la première tâche et la terminer, dans lequel le contrôleur est configuré pour générer des informations correspondantes relatives à une dépense d'un ou plusieurs éléments du groupe constitué de temps, d'énergie et d'un consommable, dont le robot a besoin pour revenir à la première tâche et la terminer.

10. Système selon la revendication 8 ou 9, dans lequel :
- le robot comprend un ou plusieurs capteurs (122) pour détecter et éviter des obstacles,
- le robot est configuré pour ne pas terminer la première tâche lorsque le ou les capteurs détectent un obstacle empêchant le robot d'exécuter la première tâche et
- le contrôleur est configuré pour délivrer en sortie les informations correspondantes comprenant des informations relatives à l'obstacle.

11. Système selon une quelconque des revendications 8 à 10, dans lequel :
- le robot est configuré pour recevoir des instructions pour exécuter une tâche supplémentaire et pour exécuter la tâche supplémentaire et toutes les tâches restantes du programme de service, et
- le contrôleur est configuré pour fournir les informations correspondantes relatives à une dépense d'un ou plusieurs éléments du groupe constitué de temps, d'énergie et d'un consommable, dont le robot a besoin pour exécuter la tâche supplémentaire et toutes les tâches restantes du programme de service.
